# EUROPEAN PATENT APPLICATION

(11) **EP 4 625 587 A1**
(43) Date of publication of application: **01.10.2025**
(21) Application number: 23934958.2
(22) Date of filing: 27.10.2023
(51) Int. Cl.: H01M 10/0567, H01M 10/0525

(54) **ADDITIVE, ELECTROLYTE COMPRISING SAME, AND LITHIUM ION BATTERY**

(30) Priority: 28.04.2023 CN 202310478312
(71) Applicant: Hefei Gotion High-Tech Power Energy Co., Ltd., Hefei, Anhui 230012 (CN)
(72) Inventor: LIU, Xin, Hefei, Anhui 230012 (CN); LIANG, Dayu, Hefei, Anhui 230012 (CN); YANG, Maoping, Hefei, Anhui 230012 (CN); LI, Daocong, Hefei, Anhui 230012 (CN)
(74) Representative: Novagraaf Technologies
(86) International application number: PCT/CN2023/127352
(87) International publication number: WO 2024/221790

(57) **Abstract**

Provided are an additive, an electrolyte comprising same, and a lithium ion battery. The additive includes [3-(N,N-dimethylamino)propyl]trimethoxysilane and a sulfonyl silane compound, and the sulfonyl silane compound has the structure as represented by formula (I). The additive of the present application can have a relatively low HOMO level and a relatively high LUMO level, and can be preferentially oxidized and reduced on the surfaces of both positive and negative electrodes to form a stable interfacial film, thereby effectively isolating an electrolyte from the positive and negative electrodes, avoiding an oxidation reaction between the electrolyte and the positive and negative electrodes, reducing the generation of HF, thus reducing the HF corrosion on the positive electrode, inhibiting the gas production of a battery at a high temperature, and improving the high-temperature storage performance and the high-temperature cycle performance of the battery. The formed interfacial film is compact and rich in inorganic substance, and achieves both low-temperature performance and rate capability.

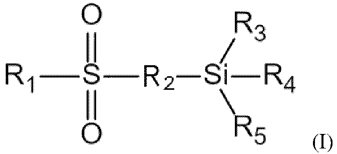

## Description

The present application is based upon and claims the benefit of priority of Chinese Patent Application No. 202310478312.2, filed on 28 April 2023, the disclosure of which is incorporated herein by reference in its entirety.

### Technical Field

The present disclosure relates to the technical field of lithium ion batteries, and in particular, to an additive, an electrolyte comprising same, and a lithium ion battery.

### Background

Lithium-ion secondary batteries have gradually gained a broad market due to their advantages such as high operating voltage, long cycle life, and fast charge and discharge rate, and play an important role in small electronic products such as mobile phones, computers, and power tools. However, with the continuous development of electronic products, the market has put forward higher requirements for the driving range of power tools. At present, two methods of increasing the operating voltage and increasing the nickel content to increase the energy density are generally used to improve the life of power tools.

However, during the operation of a battery, a side reaction occurs between the electrolyte and the surface of the negative electrode, which easily causes the battery to expand, and water reacts with a lithium salt in the electrolyte to generate HF which corrodes the positive electrode, thereby reducing the high-temperature cycle performance and the high-temperature storage performance of the battery. In the prior art, gas generation in a cell can be inhibited by means of an additive. However, although conventional sulfur-containing additives, such as 1,3-propane sultone (PS) and methylene methanedisulfonate (MMDS), have certain effects, the described additives are not conducive to improving the low-temperature performance and the rate capability of a battery, and PS is a carcinogenic chemical, is not environmentally friendly, and poses a great threat to human health.

### Summary

The main object of the present disclosure is to provide an additive, an electrolyte comprising same, and a lithium ion battery, so as to solve the problem in the prior art that batteries cannot have both low-temperature performance and rate capability.

In order to achieve the described object, according to one aspect of the present disclosure, provided is an additive. The additive includes [3-(N,N-dimethylamino)propyl]trimethoxysilane and a sulfonyl silane compound, wherein the sulfonyl silane compound has a structure as represented by formula (I): 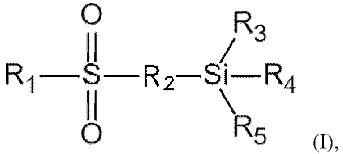
wherein R₁ represents any one of F, C₁-C₂₀ linear or branched alkyl, C₁-C₂₀ alkyl-substituted aminyl, substituted or unsubstituted C₆-C₂₀ aryl, cyano, and F-substituted C₁-C₂₀ linear or branched alkyl;
R₂ represents any one of substituted or unsubstituted imidazolyl, C₁-C₂₀ linear or branched alkyl, F-substituted C₁-C₂₀ linear or branched alkyl, C₁-C₂₀ alkoxy, C₂-C₂₀ carboxylate group, F-substituted C₂-C₂₀ carboxylate group, C₄-C₂₀ heteroaryl, and C₂-C₂₀ diethylene glycol group; and
R₃, R₄, and R₅ each independently represent any one of H, F, C₁-C₂₀ linear or branched alkyl, F-substituted C₁-C₂₀ linear or branched alkyl, and substituted or unsubstituted C₆-C₂₀ aryl.

Further, R₁ represents any one of F, primary aminyl, tertiary aminyl, and F-substituted C₁-C₁₀ linear or branched alkyl; R₂ represents any one of C₄-C₆ heteroaryl, C₁-C₁₀ linear or branched alkyl, F-substituted C₂-C₁₀ carboxylate group, and C₂-C₂₀ diethylene glycol group; and R₃, R₄, and R₅ each independently represent any one of C₁-C₆ linear or branched alkyl and unsubstituted C₆-C₂₀ aryl.

Further, R₁ represents any one of F, primary aminyl, tertiary aminyl, and trifluoromethyl; R₂ represents any one of imidazolyl, ethyl, difluoroacetate group, and diethylene glycol group; and R₃, R₄, and R₅ each independently represent any one of methyl, ethyl, isopropyl, and phenyl.

Further, the sulfonyl silane compound is selected from one or more of the following structures:

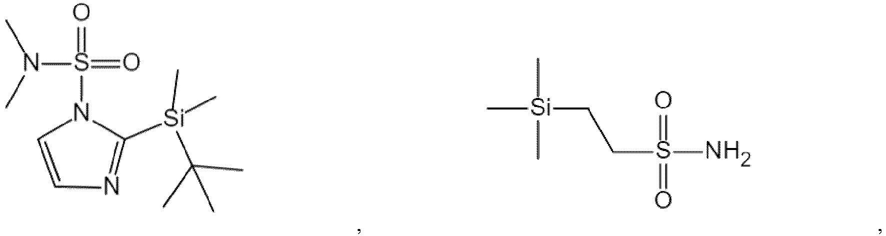

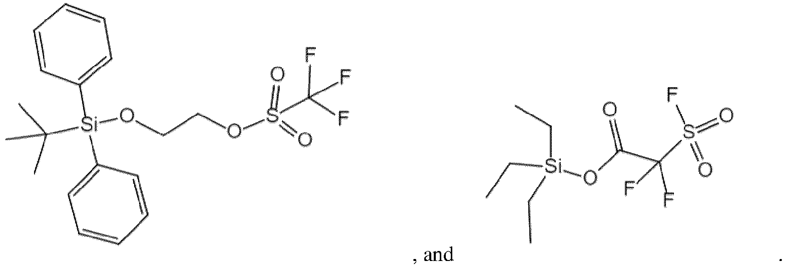

Further, the sulfonyl silane compound is selected from any one of a combination of 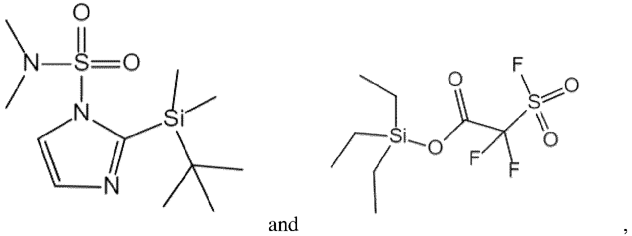 a combination of 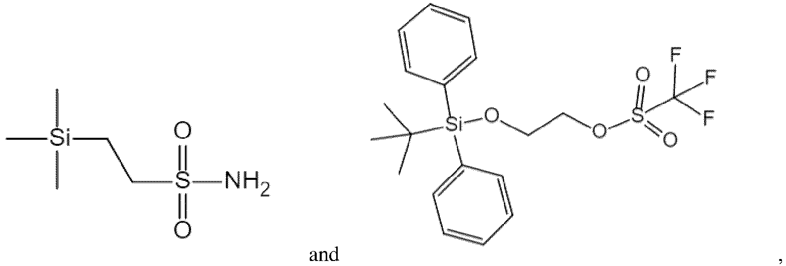 a combination of 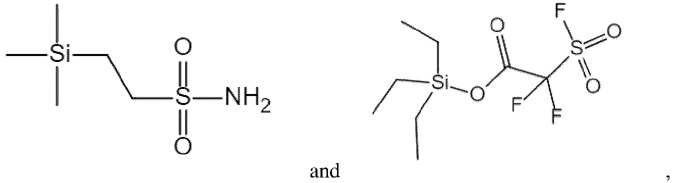 a combination of 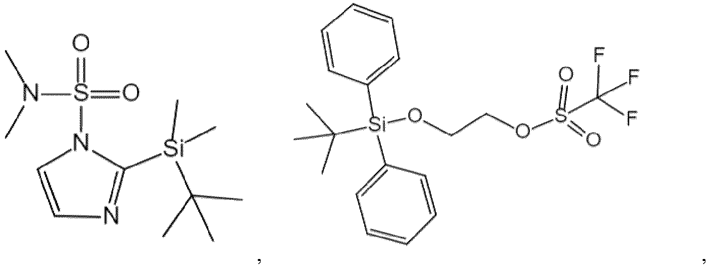 and 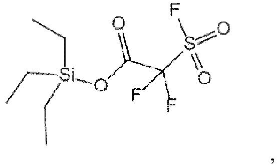 and a combination of

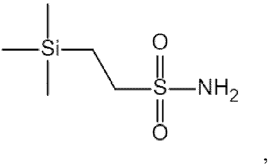

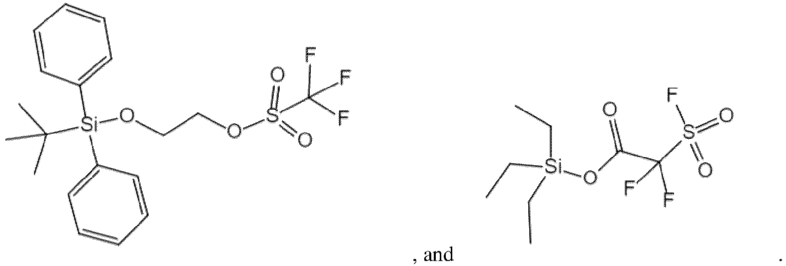

In order to achieve the described object, according to one aspect of the present disclosure, provided is an electrolyte. The electrolyte includes a lithium salt, an electrolyte additive, and a solvent. The electrolyte additive includes the described additive provided in the present application.

Further, a concentration of the lithium salt in the electrolyte is 0.5 to 1.5M; and the additive accounts for 0.1 to 5wt% of a weight of the electrolyte.

Further, the lithium salt includes at least one of lithium hexafluorophosphate, lithium tetrafluoroborate, lithium bis(oxalate)borate, lithium difluoro oxalate borate, lithium difluorooxalate phosphate, lithium bis(fluorosulfonyl)imide, and lithium bis(trifluoromethylsulfonyl)imide.

Further, the solvent includes one or more of chain and cyclic carbonates and carboxylates.

Further, the electrolyte further includes a functional additive, and the functional additive accounts for 0.2 to 10wt% of a weight of the electrolyte.

Further, the functional additive includes at least one of a circulation additive, a low-temperature additive, a high-temperature additive, a flame retardant additive, and an overcharge protection additive.

According to another aspect of the present disclosure, provided is a lithium ion battery, comprising a positive electrode, a negative electrode, a separator, and an electrolyte, wherein the electrolyte includes the described electrolyte provided in the present application.

In the technical solution of the present disclosure, the additive of the present application includes both silane group and sulfonyl group. The silane group can capture H₂O, PF₅, and HF from the electrolyte, thereby reducing damage to the structure of the positive electrode. The sulfonyl group can form a dense and thinner interfacial film. The additive of the present application can have a lower HOMO and a higher LUMO, and can undergo redox preferentially on the surface of the positive electrode and the negative electrode to form a stable interfacial film, thus effectively isolates the electrolyte and the positive and negative electrodes, avoids an oxidation reaction between the electrolyte and the positive and negative electrodes, and reduces the generation of HF, thereby reducing the corrosion of the positive electrode by HF, inhibiting the gas generation of the battery at a high temperature, and improving the high-temperature storage and high-temperature cycle performance of the battery. In addition, the interfacial film formed is dense and rich in inorganic substance, and achieves both low-temperature performance and rate capability.

### Detailed Description of the Embodiments

It is important to note that the examples of the present disclosure and the characteristics in the examples can be combined under the condition of no conflicts. Hereinafter, the present disclosure will be described in detail with reference to examples.

As analyzed in the background art, during the operation of a battery, a side reaction occurs between an electrolyte and the surface of the negative electrode, which easily causes the battery to expand, and water reacts with a lithium salt in the electrolyte to generate HF which corrodes the positive electrode, thereby reducing the high-temperature cycle performance and the high-temperature storage performance of the battery. In the prior art, gas generation in a cell can be inhibited by means of an additive. However, although conventional sulfur-containing additives, such as 1,3-propane sultone (PS) and methylene methanedisulfonate (MMDS), have certain effects, the described additives are not conducive to improving the low-temperature performance and the rate capability of a battery, and PS is a carcinogenic chemical, is not environmentally friendly, and poses a great threat to human health. In order to solve the described problem, the present application provides an additive, an electrolyte comprising same, and a lithium ion battery.

In a typical embodiment of the present application, provided is an additive, wherein the additive includes [3-(N,N-dimethylamino)propyl]trimethoxysilane and a sulfonyl silane compound, and the sulfonyl silane compound has a structure as represented by formula (I): 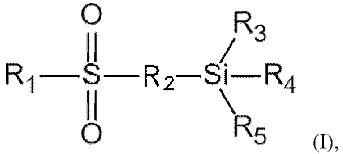 wherein R₁ represents any one of F, C₁-C₂₀ linear or branched alkyl, C₁-C₂₀ alkyl-substituted aminyl, substituted or unsubstituted C₆-C₂₀ aryl, C₁-C₂₀ alkyl-substituted cyano, and F-substituted C₁-C₂₀ linear or branched alkyl; R₂ represents any one of substituted or unsubstituted imidazolyl, C₁-C₂₀ linear or branched alkyl, F-substituted C₁-C₂₀ linear or branched alkyl, C₁-C₂₀ alkoxy, C₂-C₂₀ carboxylate group, F-substituted C₂-C₂₀ carboxylate group, C₄-C₂₀ heteroaryl, and C₂-C₂₀ diethylene glycol group; and R₃, R₄, and R₅ each independently represent any one of H, F, C₁-C₂₀ linear or branched alkyl, F-substituted C₁-C₂₀ linear or branched alkyl, and substituted or unsubstituted C₆-C₂₀ aryl.

The additive of the present application includes both [3-(N,N-dimethylamino)propyl]trimethoxysilane and a sulfonyl silane compound, wherein [3-(N,N-dimethylamino)propyl]trimethoxysilane is easier to be oxidized than a solvent to form a CEI (Cathode Electrolyte Interphase), and is also easier to be reduced to form an SEI (Solid Electrolyte Interphase), thereby being beneficial to reducing the corrosion of the positive electrode by HF. The sulfonyl silane compound includes both silane group and sulfonyl group. The silane group can capture H₂O, PF₅, and HF from an electrolyte, and reduce damage to the structure of a positive electrode. The sulfonyl group can form a dense and thinner interfacial film. The additive of the present application can have a lower HOMO and a higher LUMO, and can undergo redox preferentially on the surface of the positive electrode and the negative electrode to form a stable interfacial film, thus effectively isolates an electrolyte and the positive and negative electrodes, avoids an oxidation reaction between the electrolyte and the positive and negative electrodes, and reduces the generation of HF, thereby reducing the corrosion of the positive electrode by HF, inhibiting the gas generation of the battery at a high temperature, and improving the high-temperature storage and high-temperature cycle performance of the battery. In addition, the interfacial film formed is dense and rich in inorganic substance, and achieves both low-temperature performance and rate capability.

In order to further inhibit gas generation of a cell, in some examples, R₁ represents any one of F, primary aminyl, tertiary aminyl, and F-substituted C₁-C₁₀ linear or branched alkyl; R₂ represents any one of C₄-C₆ heteroaryl, C₁-C₁₀ linear or branched alkyl, F-substituted C₂-C₁₀ carboxylate group, and C₂-C₂₀ diethylene glycol group; and R₃, R₄, and R₅ each independently represent any one of C₁-C₆ linear or branched alkyl and unsubstituted C₆-C₂₀ aryl.

In order to further improve the high-temperature storage and high-temperature cycle performance of a battery while ensuring both the low-temperature performance and the rate capability, R₁ represents any one of F, primary aminyl, tertiary aminyl, and trifluoromethyl; R₂ represents any one of imidazolyl, ethyl, difluoroacetate group, and diethylene glycol group; and R₃, R₄, and R₅ each independently represent any one of methyl, ethyl, isopropyl, and phenyl.

In some examples, the additive is selected from one or more of the following structures: 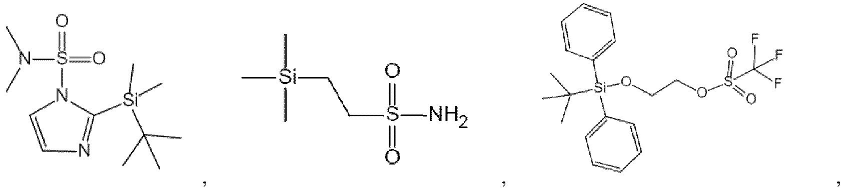 and

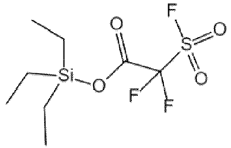

In order to further improve the high-temperature storage and high-temperature cycle performance of a battery while ensuring both the low-temperature performance and the rate capability, in some examples, the additive is any one selected from a combination of 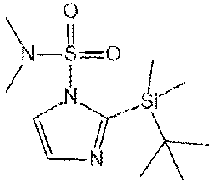 and 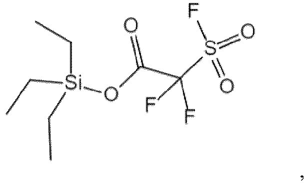 a combination of 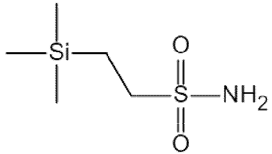 and 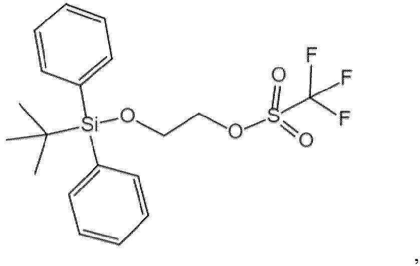 a combination of 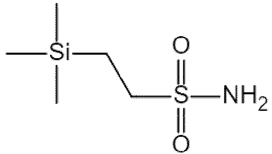 and 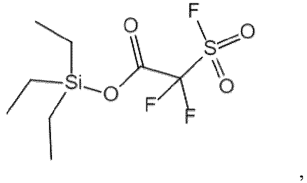 a combination of 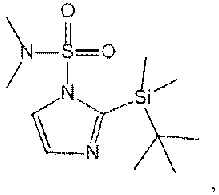 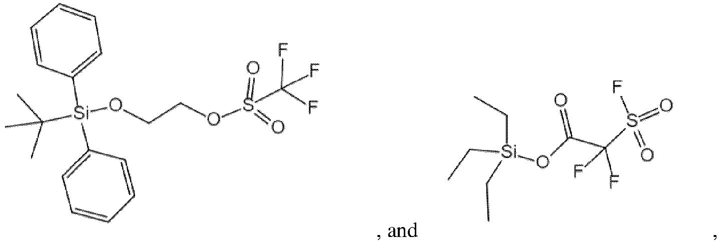 and a combination of

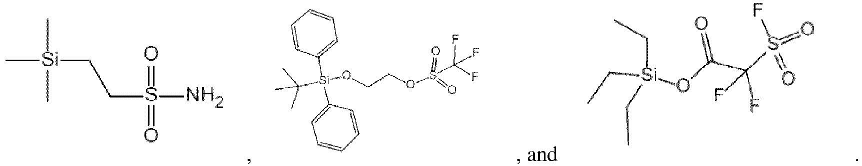

In another typical embodiment of the present application, provided is an electrolyte, wherein the electrolyte includes a lithium salt, an additive, and a solvent, and the electrolyte additive includes the described additive.

When the electrolyte including the described additive is applied to a battery, the battery has good high-temperature storage performance and high-temperature cycle performance, and can achieve both low-temperature performance and rate capability.

In order to improve the conductivity of the electrolyte and avoid an increase in the viscosity of the electrolyte caused by an excessively high concentration of a lithium salt, in some examples, a concentration of the lithium salt in the electrolyte is 0.5 to 1.5M, for example 0.5M, 0.75M, 1M, 1.25M, or 1.5M.

In some examples, the additive accounts for 0.1 to 5wt% of a weight of the electrolyte. An excessively high content of the additive will cause an excessively thick film to be formed, which affects the capacity and the rate, and increases costs at the same time; and if the additive content is too small, an interfacial film cannot be formed on the positive and negative surfaces of the battery, thereby affecting the high-temperature cycle performance and the high-temperature storage performance of the battery.

There is no particular limitation on the type of the lithium salt in the present application, and common lithium salts in the art can all be applied to the present application. In some examples, the lithium salt includes at least one of lithium hexafluorophosphate (LiPF₆), lithium tetrafluoroborate (LiBF₄), lithium bis(oxalate)borate (LiBOB), lithium difluoro oxalate borate (LiODFB), lithium difluorooxalate phosphate (LiODFP), lithium bis(fluorosulfonyl)imide (LiFSI), and lithium bis(trifluoromethylsulfonyl)imide (LiTFSI).

There is no particular limitation on the type of the solvent in the present application, and common solvents in the art can all be applied to the present application. In order to improve the solubility of the additive and the lithium salt, in some examples, the solvent includes one or more of chain and cyclic carbonates and carboxylates. Cyclic carbonate solvents include, but are not limited to, ethylene carbonate (EC), fluoroethylene carbonate (FEC), and propylene carbonate (PC); the chain carbonate solvents include, but are not limited to, dimethyl carbonate (DMC), diethyl carbonate (DEC), and ethyl methyl carbonate (EMC); and the carboxylate solvents include, but are not limited to, propyl acetate (PA), ethyl acetate (EA), and propyl propionate (PP).

In some examples, a functional additive may also be added to the described electrolyte according to product requirements, and the functional additive includes at least one of a circulation additive, a low-temperature additive, a high-temperature additive, a flame retardant additive, and an overcharge protection additive. The functional additive accounts for 0.2 to 10wt% of a weight of the electrolyte.

In some examples, the functional additive includes at least one of fluoroethylene carbonate, ethylene sulfate, tris(trimethylsilyl)phosphate, tris(trimethylsilyl)phosphate, tris(pentafluorophenyl)borane, lithium difluorophosphate, 3-heptylthiophene, hexafluorocyclotriphosphazene, and tris(hexafluoroisopropyl)phosphate.

In another typical embodiment of the present application, provided is a lithium ion battery, comprising a positive electrode, a negative electrode, a separator, and an electrolyte, wherein the electrolyte includes the described electrolyte.

The lithium ion battery comprising the described electrolyte has good high-temperature storage performance and high-temperature cycle performance, and can achieve both low-temperature performance and rate capability.

The positive electrode active material in the described positive electrode can be one selected from LiNi_{1-x-y-z}CoₓMn_{y}Al_{z}O₂, lithium nickel manganate, lithium cobalt oxide, lithium-rich manganese-based solid solution, lithium manganate, or lithium iron phosphate, wherein 0≤x≤1, 0≤y≤1, 0≤z≤1, and 0≤x+y+z≤1.

The negative electrode active material of the described negative electrode can be one selected from artificial graphite, coated natural graphite, silicon-carbon negative electrode, silicon negative electrode, or lithium titanate.

The present disclosure will be further described in detail with reference to the following examples, which should not be construed as limiting the scope of protection of the present disclosure.

The compounds used in the examples of the present application are shown in table 1.

**Table 1**

| [3-(N,N-dimethylamino)propyl]trimethoxysilane | 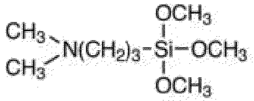 |
|---|---|
| compound 1 | 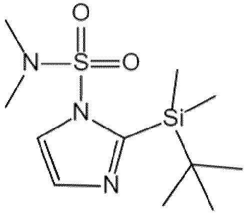 |
| compound 2 | 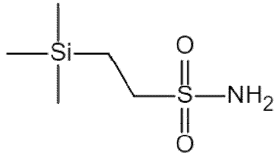 |
| compound 3 | 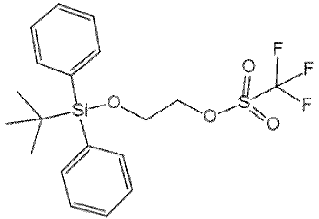 |
| compound 4 | 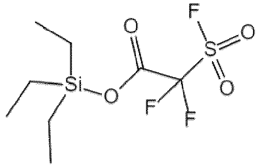 |

### Example 1

Ethylene carbonate (EC), diethyl carbonate (DEC), and ethyl methyl carbonate (EMC) were mixed in a mass ratio of EC: DEC: EMC = 1:1:2. After mixing, 1M lithium hexafluorophosphate (LiPF₆) was added. After the lithium salt was completely dissolved, 1% of lithium difluorophosphate, 3% of fluoroethylene carbonate, 1% of ethylene sulfate, and 2% of hexafluorocyclotriphosphazene were added, and then 0.5% of the compound 1 and [3-(N,N-dimethylamino)propyl]trimethoxysilane were added, so as to obtain an electrolyte.

### Example 2

Ethylene carbonate (EC), propylene carbonate (PC), diethyl carbonate (DEC), and ethyl methyl carbonate (EMC) were mixed in a mass ratio of EC: PC: DEC: EMC = 1:1:1:2. After mixing, 0.8M lithium hexafluorophosphate (LiPF₆) and 0.2M lithium bis(fluorosulfonyl)imide (LiFSI) were further added. After the lithium salt was completely dissolved, 1% of lithium difluorophosphate, 3% of fluoroethylene carbonate, 1% of ethylene sulfate, and 2% of hexafluorocyclotriphosphazene were added, and 3% of the compound 1 and [3-(N,N-dimethylamino)propyl]trimethoxysilane were added to obtain an electrolyte.

### Example 3

Ethylene carbonate (EC), ethyl methyl carbonate (EMC), and diethyl carbonate (DEC) were mixed in a mass ratio of EC: DEC: EMC = 1:2:1. After mixing, 0.7M lithium hexafluorophosphate (LiPF₆) and 0.3M lithium bis(fluorosulfonyl)imide (LiFSI) were added. After the lithium salt was completely dissolved, 1% of lithium difluorophosphate, 3% of fluoroethylene carbonate, 1% of ethylene sulfate, and 2% of hexafluorocyclotriphosphazene were further added, and 0.5% of the compound 2 and [3-(N,N-dimethylamino)propyl]trimethoxysilane were added, so as to obtain an electrolyte.

### Example 4

Ethylene carbonate (EC), ethyl methyl carbonate (EMC), and diethyl carbonate (DEC) were mixed in a mass ratio of EC: DEC: EMC = 1:2:1. After mixing, 0.7M lithium hexafluorophosphate (LiPF₆) and 0.3M lithium bis(fluorosulfonyl)imide (LiFSI) were added. After the lithium salt was completely dissolved, 1% of lithium difluorophosphate, 3% of fluoroethylene carbonate, 1% of ethylene sulfate, and 2% of hexafluorocyclotriphosphazene were further added, and then 0.5% of the compound 3 and [3-(N,N-dimethylamino)propyl]trimethoxysilane were added, so as to obtain an electrolyte.

### Example 5

Ethylene carbonate (EC), diethyl carbonate (DEC), and ethyl methyl carbonate (EMC) were mixed in a mass ratio of EC: DEC: EMC = 1:1:2. After mixing, 1M lithium hexafluorophosphate (LiPF₆) was added. After the lithium salt was completely dissolved, 1% of lithium difluorophosphate, 3% of fluoroethylene carbonate, 1% of ethylene sulfate, and 2% of hexafluorocyclotriphosphazene were further added, and then 0.5% of the compound 4 and [3-(N,N-dimethylamino)propyl]trimethoxysilane were added, so as to obtain an electrolyte.

### Example 6

Ethylene carbonate (EC), propylene carbonate (PC), diethyl carbonate (DEC), and ethyl methyl carbonate (EMC) were mixed in a mass ratio of EC: PC: DEC: EMC = 1:1:1. After mixing, 0.7M lithium hexafluorophosphate (LiPF₆) and 0.3M lithium bis(fluorosulfonyl)imide (LiFSI) were added. After the lithium salt was completely dissolved, 1% of lithium difluorophosphate, 3% of fluoroethylene carbonate, 1% of ethylene sulfate, 2% of hexafluorocyclotriphosphazene, and 0.3% of 3-heptylthiophene were further added, and then 0.5% of the compound 1 and 3% of the compound 4 and [3-(N,N-dimethylamino)propyl]trimethoxysilane were added, so as to obtain an electrolyte.

### Example 7

Ethylene carbonate (EC), diethyl carbonate (DEC), and ethyl methyl carbonate (EMC) were mixed in a mass ratio of EC: DEC: EMC = 1:1:1. After mixing, 0.8M lithium hexafluorophosphate (LiPF₆) and 0.2M lithium difluoro oxalate borate (LiODFB) were added. After the lithium salt was completely dissolved, 1% of lithium difluorophosphate, 3% of fluoroethylene carbonate, 1% of ethylene sulfate, 2% of hexafluorocyclotriphosphazene, and 0.3% of 3-heptylthiophene were added, and 0.5% of the compound 2 and 2% of the compound 3 and [3-(N,N-dimethylamino)propyl]trimethoxysilane were added, so as to obtain an electrolyte.

### Example 8

Ethylene carbonate (EC), diethyl carbonate (DEC), ethyl methyl carbonate (EMC), and propyl propionate (PP) were mixed in a mass ratio of EC: DEC: EMC: PP = 1:1:1:1. After mixing, 1M lithium hexafluorophosphate (LiPF₆) was added. After the lithium salt was completely dissolved, 1% of lithium difluorophosphate, 3% of fluoroethylene carbonate, 1% of ethylene sulfate, 2% of hexafluorocyclotriphosphazene, and 0.3% of 3-heptylthiophene were further added, and 1% of the compound 2 and 2.5% of the compound 4 and [3-(N,N-dimethylamino)propyl]trimethoxysilane were added, so as to obtain an electrolyte.

### Example 9

Ethylene carbonate (EC), diethyl carbonate (DEC), ethyl methyl carbonate (EMC), and propyl propionate (PP) were mixed in a mass ratio of EC: DEC: EMC: PP = 1:1:1:1. After mixing, 1M lithium hexafluorophosphate (LiPF₆) was added. After the lithium salt was completely dissolved, 1% of lithium difluorophosphate, 3% of fluoroethylene carbonate, 1% of ethylene sulfate, 2% of hexafluorocyclotriphosphazene, and 0.3% of 3-heptylthiophene were further added, and 0.5% of the compound 1, 1.5% of the compound 3, and 0.8% of the compound 4 and [3-(N,N-dimethylamino)propyl]trimethoxysilane were added, so as to obtain an electrolyte.

### Example 10

Ethylene carbonate (EC), diethyl carbonate (DEC), ethyl methyl carbonate (EMC), and propyl propionate (PP) were mixed in a mass ratio of EC: DEC: EMC: PP = 1:1:1:1. After mixing, 1M lithium hexafluorophosphate (LiPF₆) was added. After the lithium salt was completely dissolved, 1% of lithium difluorophosphate, 3% of fluoroethylene carbonate, 1% of ethylene sulfate, 2% of hexafluorocyclotriphosphazene, and 0.3% of 3-heptylthiophene were further added, and 1% of the compound 2, 0.6% of the compound 3, and 1.5% of the compound 4 and [3-(N,N-dimethylamino)propyl]trimethoxysilane were added, so as to obtain an electrolyte.

### Example 11

Ethylene carbonate (EC), propylene carbonate (PC), diethyl carbonate (DEC), and ethyl methyl carbonate (EMC) were mixed in a mass ratio of EC: PC: DEC: EMC = 1:1:1. After mixing, 0.7mol of lithium hexafluorophosphate (LiPF₆) and 0.3mol of lithium bis(fluorosulfonyl)imide (LiFSI) were added. After the lithium salt was completely dissolved, 1% of lithium difluorophosphate, 3% of fluoroethylene carbonate, 1% of ethylene sulfate, 2% of hexafluorocyclotriphosphazene, and 0.3% of 3-heptylthiophene were added, and 0.5% of the compound 1 and 3% of the compound 2 and [3-(N,N-dimethylamino)propyl]trimethoxysilane were added, so as to obtain an electrolyte.

### Example 12

Ethylene carbonate (EC), propylene carbonate (PC), diethyl carbonate (DEC), and ethyl methyl carbonate (EMC) were mixed in a mass ratio of EC: PC: DEC: EMC = 1:1:1. After mixing, 0.7mol of lithium hexafluorophosphate (LiPF₆) and 0.3mol of lithium bis(fluorosulfonyl)imide (LiFSI) were added. After the lithium salt was completely dissolved, 1% of lithium difluorophosphate, 3% of fluoroethylene carbonate, 1% of ethylene sulfate, 2% of hexafluorocyclotriphosphazene, and 0.3% of 3-heptylthiophene were further added, and 0.5% of the compound 1 and 3% of the compound 3 and [3-(N,N-dimethylamino)propyl]trimethoxysilane were added, so as to obtain an electrolyte.

### Example 13

Ethylene carbonate (EC), diethyl carbonate (DEC), ethyl methyl carbonate (EMC), and propyl propionate (PP) were mixed in a mass ratio of EC: DEC: EMC: PP = 1:1:1:1. After mixing, 1mol of lithium hexafluorophosphate (LiPF₆) was added. After the lithium salt was completely dissolved, 1% of lithium difluorophosphate, 3% of fluoroethylene carbonate, 1% of ethylene sulfate, 2% of hexafluorocyclotriphosphazene, and 0.3% of 3-heptylthiophene were further added, and 0.5% of the compound 1, 1.5% of the compound 2, and 0.8% of the compound 3 and [3-(N,N-dimethylamino)propyl]trimethoxysilane were added, so as to obtain an electrolyte.

### Example 14

Ethylene carbonate (EC), diethyl carbonate (DEC), and ethyl methyl carbonate (EMC) were mixed in a mass ratio of EC: DEC: EMC = 1:1:2. After mixing, 1M lithium hexafluorophosphate (LiPF₆) was added. After the lithium salt was completely dissolved, 1% of lithium difluorophosphate, 3% of fluoroethylene carbonate, 1% of ethylene sulfate, and 2% of hexafluorocyclotriphosphazene were further added, and then 4% of the compound 1 and [3-(N,N-dimethylamino)propyl]trimethoxysilane were added, so as to obtain an electrolyte.

### Comparative Example 1

The difference from Example 1 lied in that compound 1 was not contained. The other raw materials and preparation methods were the same as those in Example 1.

### Comparative Example 2

The difference from Example 6 lied in that the compound 1 and the compound 4 were not contained. The other raw materials and preparation methods were the same as those in Example 6.

### Comparative Example 3

The difference from Example 9 lied in that the compounds 1 and 3 and the compound 4 were not contained. The other raw materials and preparation methods were all the same as those in Example 9.

### Comparative Example 4

Ethylene carbonate (EC), diethyl carbonate (DEC), and ethyl methyl carbonate (EMC) were mixed in a mass ratio of EC: DEC: EMC = 1:1:2. After mixing, 1mol of lithium hexafluorophosphate (LiPF₆) was added. After the lithium salt was completely dissolved, 1% of lithium difluorophosphate, 3% of fluoroethylene carbonate, 1% of ethylene sulfate, and 2% of hexafluorocyclotriphosphazene were added, and then 0.5% of MMDS was added, so as to obtain an electrolyte.

### Comparative Example 5

The difference from Example 1 lied in that [3-(N,N-dimethylamino)propyl]trimethoxysilane was not contained.

Preparation of a positive electrode sheet: A ternary material LiNi0_{0.7}C0_{0.1}Mn_{0.2}, a conductive agent Super P, a binder PVDF, and carbon nanotubes (CNT) were uniformly mixed at a mass ratio of 97.2:1.8:1:1 to prepare a positive electrode slurry for a lithium ion battery having a certain viscosity. The positive electrode slurry was coated on a current collector aluminum foil, with the coating amount being 340g/m², and dried at 85°C. Then, the current collector aluminum foil was subjected to cold pressing, cut into strips and slices, and then dried at 85°C under vacuum for 4h to obtain a positive electrode sheet for a lithium ion battery meeting requirements.

Preparation of a negative electrode sheet: A slurry was prepared from artificial graphite, a conductive agent Super P, a thickening agent CMC, and a binder SBR (styrene-butadiene rubber emulsion) in a mass ratio of 94.5:1.5:1.5:2.5, and mixed until uniform. The formulated slurry was coated on both surfaces of a copper foil, and dried. The copper foil was rolled to obtain a negative electrode sheet. Then, the negative electrode sheet was dried under vacuum at 85°C for 4h to prepare a negative electrode sheet for a lithium ion battery meeting the requirements.

Preparation of a lithium ion battery: The positive electrode sheet, the negative electrode sheet, and the separator prepared according to the described processes were manufactured into a lithium ion battery having a thickness of 0.5mm, a width of 5mm, and a length of 8mm via a lamination process, the capacity being 3Ah. The lithium ion battery was dried under vacuum at 85°C for 48 hours. The electrolyte of each of the described examples and comparative examples was injected to complete the preparation of a battery.

The electrical performance of the 3Ah soft-pack lithium-ion batteries assembled in the described Examples 1 to 15 and Comparative Examples 1 to 4 was tested, and the specific testing method is as follows:

### (1) Initial direct current resistance (DCR) test

After capacity division, the experimental batteries in Examples 1 to 15 and Comparative Examples 1 to 4 were respectively charged to a charge state of 50% SOC, and the sampling voltage V0 at the beginning of discharge was recorded after resting for 30 minutes. Then, after discharging at current I and 3C for 10s, the sampling voltage V1 at the end of discharge was recorded, and the initial direct current discharge resistance of the experimental batteries was calculated as DCR = (V1-V0)/I.

### (2) Cycle performance test

Under testing conditions of 45°C, the experimental batteries in Examples 1 to 15 and Comparative Examples 1 to 4 were respectively subjected to a charging/discharging cycle performance test at a charging/discharging rate of 1C, the charging/discharging voltage range was set as 2.8 to 4.25V, the high-temperature cycle was 800 cycles, the DCR was measured once every 100 cycles, and the capacity retention rate and the DCR growth rate were recorded.

### (3) High-temperature standing test

The experimental batteries were charged and discharged at a rate of 0.33C for 3 cycles at room temperature, and the average value of the discharge capacity was taken as C1. Then, the batteries were charged to 100% SOC, left at 60°C for 7d, and left at room temperature for 6h. The batteries were discharged at a rate of 0.33C, and the discharge capacity was taken as C2. Then, the batteries were charged and discharged for 3 cycles, and the average value of the discharge capacity was taken as C3. C2 divided by C1 was the capacity retention rate, and C3 divided by C1 was the capacity recovery rate.

### (4) Low-temperature test

At room temperature, the experimental batteries were charged and discharged at a rate of 1C for 3 cycles, and the average value thereof was taken as C1. Then, the batteries were charged to 100% SOC, left at -20°C for 10h, and discharged to 2.8V at 1C, and the discharge capacity was recorded as C2. C1 divided by C2 was the low-temperature discharge retention rate.

### (5) Rate test

The experimental batteries were charged and discharged at a rate of 1C for 3 cycles at room temperature, and the average value was taken as C1. Then, the experimental batteries were charged to 100% SOC, and discharged at 3C to 2.8V, and the discharge capacity was recorded as C2. C1 divided by C2 was the discharge capacity retention rate at a rate of 3C.

**Table 2**

| | Initial DCR (mQ) | Capacity retention rate after 800 cycles at 45°C | 45°C/DCR growth rate after 800 cycles | 60°C/capacity retention and recovery after 28d | 60°C/volume growth rate after 28d | Low-temperature discharge retention rate at -20°C | Discharge capacity retention rate at a rate of 3C |
|---|---|---|---|---|---|---|---|
| Example 1 | 22.2 | 91.0% | 5.2% | 89.5%/95.1% | 6.9% | 66.3% | 78.8% |
| Example 2 | 21.2 | 91.6% | 4.9% | 90.5%/95.8% | 6.3% | 67.8% | 79.9% |
| Example 3 | 21.9 | 91.0% | 5.1% | 89.4%/95.2% | 7.1% | 66.4% | 78.9% |
| Example 4 | 22.3 | 91.1% | 5.0% | 89.5%/95.1% | 7.0% | 66.2% | 78.9% |
| Example 5 | 22.1 | 91.2% | 5.2% | 89.6%/95.2% | 6.9% | 66.4% | 78.7% |
| Example 6 | 21.4 | 91.4% | 5.0% | 90.2%/95.5% | 6.6% | 66.9% | 78.9% |
| Example 7 | 21.3 | 91.9% | 4.5% | 90.7%/95.1% | 6.7% | 67.6% | 79.2% |
| Example 8 | 21.5 | 91.3% | 5.0% | 89.9%/95.4% | 6.5% | 66.8% | 78.8% |
| Example 9 | 22.3 | 91.8% | 4.6% | 90.9%/94.9% | 6.6% | 67.5% | 78.9% |
| Example 10 | 21.1 | 91.5% | 4.8% | 90.5%/95.4% | 6.2% | 67.3% | 79.5% |
| Example 11 | 21.3 | 91.5% | 5.1% | 90.1%/95.1% | 6.7% | 66.6% | 78.7% |
| Example 12 | 21.3 | 91.3% | 5.0% | 90.0%/95.3% | 6.5% | 66.8% | 78.8% |
| Example 13 | 22.4 | 91.7% | 4.8% | 90.6%/95.0% | 6.7% | 67.3% | 78.7% |
| Example 14 | 22.9 | 89.6% | 5.9% | 89.1%/94.8% | 7.4% | 66.7% | 77.9% |
| Comparative Example 1 | 35.3 | ≤80% | 20.2% | 81.5%/87.3% | 15.2% | 54.2% | 64.8% |
| Comparative Example 2 | 36.8 | ≤80% | 22.5% | 81.5%/87.1% | 15.5% | 54.7% | 65.1% |
| Comparative Example 3 | 36.9 | ≤80% | 21.3% | 81.1 %/87.0% | 15.3% | 53.5% | 64.6% |
| Comparative Example 4 | 38.2 | 81.6% | 24.6% | 84.4%/90.1% | 13.5% | 50.7% | 62.1% |
| Comparative Example 5 | 32.4 | 83.5% | 15.8% | 86.1 %/92.3% | 12.1% | 57.4% | 68.3% |

On the basis of Table 2,
1) by comparing the initial DCR results of the lithium ion batteries of Examples 1 to 14 with those of the lithium ion batteries of Comparative Examples 1 to 5 respectively, it can be determined that the additive of the present disclosure can effectively reduce the initial DCR and the increase of DCR during the cycle compared with traditional functional additives, thereby improving the high-temperature cycle.
2) By comparing the high-temperature storage and volume expansion rate results of the electrolytes and experimental batteries in Examples 1 to 14 with those in Comparative Examples 1 to 5, it can be determined that the additives and electrolytes of the present disclosure can inhibit gas generation in the battery cell compared with conventional functional additives, thereby improving the retention and recovery rate of high-temperature storage.
3) By comparing the low-temperature and rate test results of the electrolytes and experimental batteries in Examples 1 to 14 and Comparative Examples 1 to 5, it can be determined that the additives and electrolytes of the present disclosure can improve the low-temperature discharge performance and rate capability compared with conventional additives.

From the description above, it can be determined that the described examples of the present disclosure achieve the following technical effects: the additive of the present application includes both silane group and sulfonyl group. The silane group can capture H₂O, PF₅, and HF from the electrolyte, thereby reducing damage to the structure of the positive electrode. The sulfonyl group can form a dense and thinner interfacial film. The additive of the present application can form a stable interfacial film on the surface of the positive electrode and the negative electrode, thus effectively isolates the electrolyte and the positive and negative electrodes, avoids an oxidation reaction between the electrolyte and the positive and negative electrodes, and reduces the generation of HF, thereby reducing the corrosion of the positive electrode by HF, inhibiting the gas generation of the battery at a high temperature, and improving the high-temperature storage and high-temperature cycle performance of the battery, while ensuring both the low-temperature performance and rate capability.

The description above is only the preferred examples of the present disclosure, and is not intended to limit the present disclosure. For those skilled in the art, the present disclosure may have various modifications and variations. Any modifications, equivalent replacements, improvements and the like made within the spirit and principle of the present disclosure shall fall within the scope of protection of the present disclosure.

## Claims

1. An additive, wherein the additive comprising [3-(N,N-dimethylamino)propyl]trimethoxysilane and a sulfonyl silane compound, and the sulfonyl silane compound has a structure as represented by formula (I): 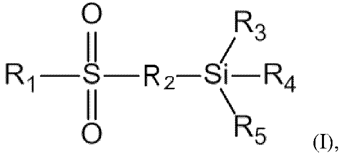
wherein R₁ represents any one of F, C₁-C₂₀ linear or branched alkyl, C₁-C₂₀ alkyl-substituted aminyl, substituted or unsubstituted C₆-C₂₀ aryl, cyano, and F-substituted C₁-C₂₀ linear or branched alkyl;
R₂ represents any one of substituted or unsubstituted imidazolyl, C₁-C₂₀ linear or branched alkyl, F-substituted C₁-C₂₀ linear or branched alkyl, C₁-C₂₀ alkoxy, C₂-C₂₀ carboxylate group, F-substituted C₂-C₂₀ carboxylate group, C₄-C₂₀ heteroaryl, and C₂-C₂₀ diethylene glycol group; and
R₃, R₄, and R₅ each independently represent any one of H, F, C₁-C₂₀ linear or branched alkyl, F-substituted C₁-C₂₀ linear or branched alkyl, and substituted or unsubstituted C₆-C₂₀ aryl.

2. The additive according to claim 1, wherein the R₁ represents any one of F, primary aminyl, tertiary aminyl, and F-substituted C₁-C₁₀ linear or branched alkyl;
the R₂ represents any one of C₄-C₆ heteroaryl, C₁-C₁₀ linear or branched alkyl, F-substituted C₂-C₁₀ carboxylate group, and C₂-C₂₀ diethylene glycol group; and
the R₃, the R₄, and the R₅ each independently represent any one of C₁-C₆ linear or branched alkyl and unsubstituted C₆-C₂₀ aryl.

3. The additive according to claim 1, wherein the R₁ represents any one of F, primary aminyl, tertiary aminyl, and trifluoromethyl;
the R₂ represents any one of imidazolyl, ethyl, difluoroacetate group, and diethylene glycol group; and
the R₃, the R₄, and the R₅ each independently represent any one of methyl, ethyl, isopropyl, and phenyl.

4. The additive according to claim 1, wherein the sulfonyl silane compound is selected from one or more of the following structures:

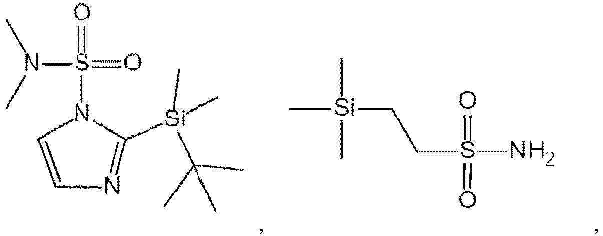

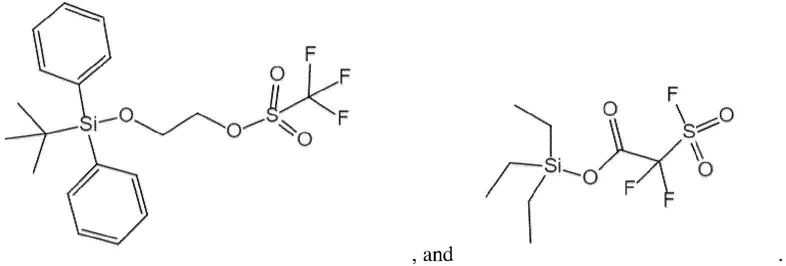

5. The additive according to claim 1, wherein the sulfonyl silane compound is any one selected from a combination of 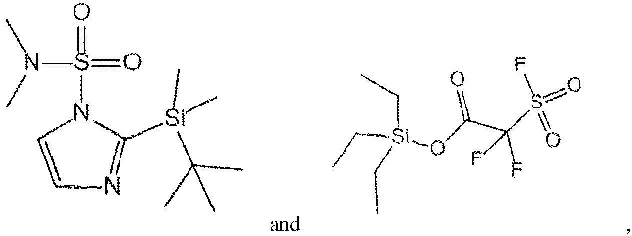 a combination of 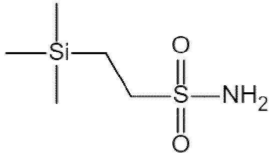 and 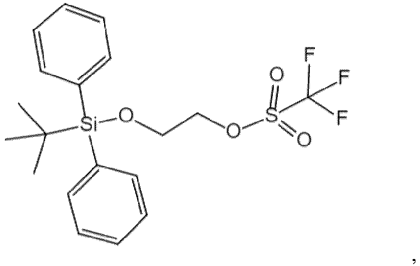 a combination of 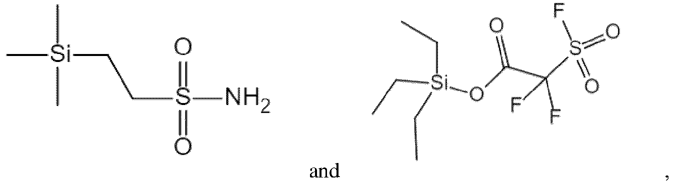 a combination of 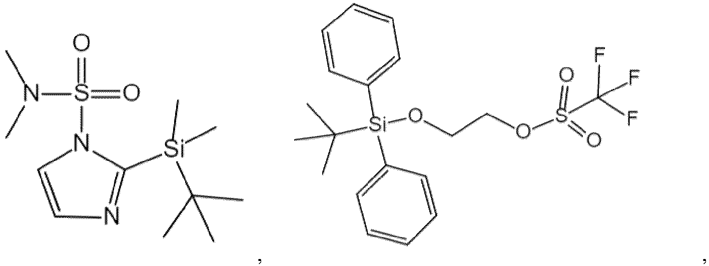 and 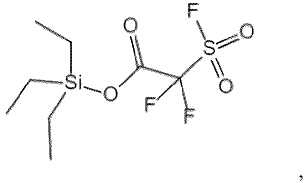 and a combination of

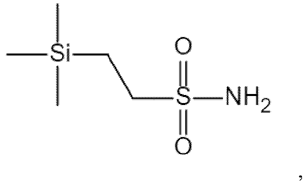

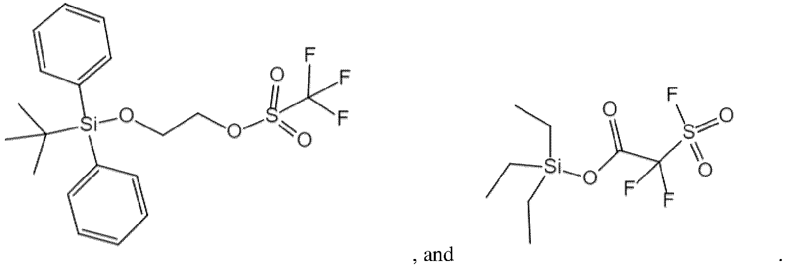

6. An electrolyte, comprising a lithium salt, an electrolyte additive, and a solvent, wherein the electrolyte additive comprising the additive of any one of claims 1 to 5.

7. The electrolyte according to claim 6, wherein a concentration of the lithium salt in the electrolyte is 0.5 to 1.5M; and the additive accounts for 0.1 to 5wt% of a weight of the electrolyte.

8. The electrolyte according to claim 6, wherein the lithium salt comprising at least one of lithium hexafluorophosphate, lithium tetrafluoroborate, lithium bis(oxalate)borate, lithium difluoro oxalate borate, lithium difluorooxalate phosphate, lithium bis(fluorosulfonyl)imide, and lithium bis(trifluoromethylsulfonyl)imide.

9. The electrolyte according to claim 6, wherein the solvent comprising one or more of chain and cyclic carbonates and carboxylates.

10. The electrolyte according to claim 6, wherein the electrolyte further comprising a functional additive, and the functional additive accounts for 0.2 to 10wt% of a weight of the electrolyte.

11. The electrolyte according to claim 10, wherein the functional additive comprising at least one of a circulation additive, a low-temperature additive, a high-temperature additive, a flame retardant additive, and an overcharge protection additive.

12. A lithium ion battery, comprising a positive electrode, a negative electrode, a separator, and an electrolyte, wherein the electrolyte comprising the electrolyte according to claim 6.
